# EUROPEAN PATENT APPLICATION

(11) **EP 4 780 013 A1**
(43) Date of publication of application: **22.07.2026**
(21) Application number: 24882633.1
(22) Date of filing: 03.09.2024
(51) Int. Cl.: H04N 23/63, H04N 23/61, H04N 23/57, G03B 17/16, H04N 5/77, H04N 5/14

(54) **ELECTRONIC DEVICE FOR TAKING PHOTO INCLUDING EVENT SECTION, OPERATION METHOD THEREFOR, AND STORAGE MEDIUM**

(30) Priority: 27.10.2023 KR 20230145307; 16.01.2024 KR 20240006537
(71) Applicant: Samsung Electronics Co., Ltd., Suwon-si, Gyeonggi-do 16677 (KR)
(72) Inventor: JEONG, Soyeong, Suwon-si Gyeonggi-do 16677 (KR); YOO, Eunhye, Suwon-si Gyeonggi-do 16677 (KR); KIM, Jihyun, Suwon-si Gyeonggi-do 16677 (KR)
(74) Representative: Gulde & Partner
(86) International application number: PCT/KR2024/013259
(87) International publication number: WO 2025/089604

(57) **Abstract**

According to an embodiment, an electronic device (101) may comprise a camera (180, 380), a display (160, 360), at least one processor (120, 320), and a memory (130, 330). According to an embodiment, the memory may store instructions configured to, when executed by the at least one processor, cause the electronic device to: display a preview image acquired through the camera on the display; receive a first input for capturing a still image while displaying the preview image on the display; in response to receiving the first input, detect the amount of change in an object included in the preview image; on the basis of the amount of change in the object, identify whether or not an event occurs within the preview image; when identifying that the event has occurred within the preview image, determine an event section including a start time point and an end time point of the event; and store a moving image corresponding to the event section together with the still image.

## Description

### [Technical Field]

An embodiment disclosed in the present document relates to an electronic device for capturing a photograph including an event section, an operating method thereof, and a storage medium.

### [Background Art]

As a variety of services and additional functions provided through electronic devices, such as smartphones, gradually increase, various applications that may be run on electronic devices are being developed. Further, the hardware and/or software of electronic devices are continuously evolving.

As an example, there is a camera application for capturing an image (e.g., a still image or a video) using a camera mounted on the electronic device, and the number of users who capture and enjoy images using the camera application is increasing. Further, there is a need for sharing user created contents (UCC), which are captured or directly produced by a user regarding moments the user does not want to miss, with other users through a social network service (SNS). For example, when capturing a photograph using a camera of the electronic device, new types of capturing functions different from existing captures or videos are being developed. Therefore, when capturing a photograph, if a video of a moment that the user does not want to miss may be provided together, the user's convenience may be increased.

The above-described information may be provided as a related art for the purpose of aiding understanding of the disclosure. No claim or determination is made as to whether any of the foregoing is applicable as background art in relation to the disclosure.

### [Detailed Description of the Invention]

### [Technical Solution]

According to an embodiment, an electronic device 101 may include a camera 180, 380, a display 160, 360, at least one processor 120, 320, and memory 130, 330. According to an embodiment, the memory may store instructions configured to, when executed individually or collectively by the at least one processor, cause the electronic device to display a preview image obtained through the camera on the display.

According to an embodiment, the instructions may be configured to cause the electronic device to receive a first input for capturing a still image while displaying the preview image on the display.

According to an embodiment, the instructions may be configured to cause the electronic device to, in response to receiving the first input, detect an amount of change of an object included in the preview image.

According to an embodiment, the instructions may be configured to cause the electronic device to, based on the amount of change of the object, identify whether an event occurs in the preview image.

According to an embodiment, the instructions may be configured to cause the electronic device to, in response to identifying that the event occurs in the preview image, determine an event section including a start time and an end time of the event.

According to an embodiment, the instructions may be configured to cause the electronic device to store a video corresponding to the event section together with the still image.

According to an embodiment, a method for capturing a photograph including an event section in an electronic device may include an operation of displaying a preview image obtained through a camera.

According to an embodiment, the method may include an operation of receiving a first input for capturing a still image while displaying the preview image.

According to an embodiment, the method may include an operation of, in response to receiving the first input, detecting an amount of change of an object included in the preview image.

According to an embodiment, the method may include an operation of, based on the amount of change of the object, identifying whether an event occurs in the preview image.

According to an embodiment, the method may include an operation of, in response to identifying that the event occurs in the preview image, determining an event section including a start time and an end time of the event.

According to an embodiment, the method may include an operation of storing a video corresponding to the event section together with the still image.

According to an embodiment, in a non-transitory storage medium storing instructions, the instructions are configured to, when executed by at least one processor 120, 320 of an electronic device 101, cause the electronic device to perform at least one operation, and the at least one operation may include an operation of displaying a preview image obtained through a camera.

According to an embodiment, the at least one operation may include an operation of receiving a first input for capturing a still image while displaying the preview image.

According to an embodiment, the at least one operation may include an operation of, in response to receiving the first input, detecting an amount of change of an object included in the preview image.

According to an embodiment, the at least one operation may include an operation of, based on the amount of change of the object, identifying whether an event occurs in the preview image.

According to an embodiment, the at least one operation may include an operation of, in response to identifying that the event occurs in the preview image, determining an event section including a start time and an end time of the event.

According to an embodiment, the at least one operation may include an operation of storing a video corresponding to the event section together with the still image.

A computer-readable non-transitory recording medium according to an embodiment of the present description may store at least one instruction and/or instructions causing the electronic device to perform the above-described method or operation of the electronic device when executed.

### [Brief Description of Drawings]

FIG. 1 is a block diagram illustrating an electronic device in a network environment according to an embodiment.
FIG. 2 is a view illustrating a method of obtaining a video together with a still image when capturing a photograph.
FIG. 3 is a block diagram illustrating an internal configuration of an electronic device according to an embodiment.
FIG. 4 is a file structure diagram including a video regarding an event section stored together with a still image according to an embodiment.
FIG. 5 is an operation flowchart of an electronic device for capturing a photograph including an event section according to an embodiment.
FIG. 6 is an operation flowchart of an electronic device for identifying an event section when capturing a photograph according to an embodiment.
FIG. 7 is a view illustrating a method for determining an event section according to an embodiment.
FIG. 8 is a view illustrating an example of a screen before and after capturing a photograph according to an embodiment.
FIG. 9 is an operation flowchart of an electronic device for playing an image according to an embodiment.
FIG. 10 is a view illustrating a playback method that varies according to an event attribute according to an embodiment.
FIG. 11 is a view illustrating a method of playing an image at a playback speed determined according to an event attribute according to an embodiment.

In connection to the description of the drawings, the same or similar reference numerals may be used for the same or similar components.

### [Mode for Carrying out the Invention]

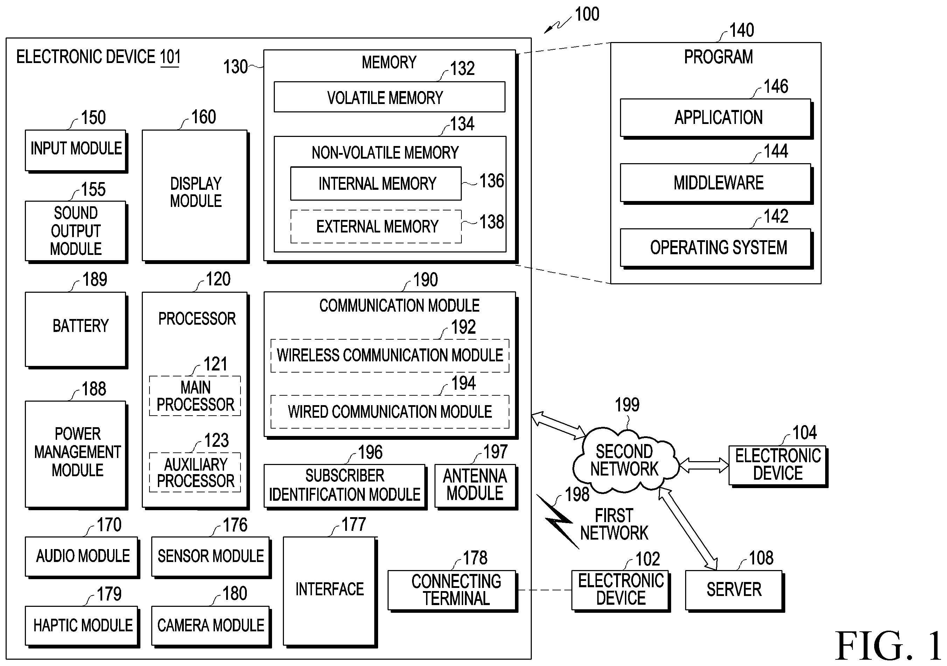

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, the components easy to understand from the description of the above embodiments are denoted with or without the same reference numerals and their detailed description may be skipped. According to an embodiment of the disclosure, an electronic device 101 may be implemented by selectively combining configurations of various embodiments, and the configuration of one embodiment may be replaced by the configuration of another embodiment. However, it is noted that the disclosure is not limited to a specific drawing or embodiment.

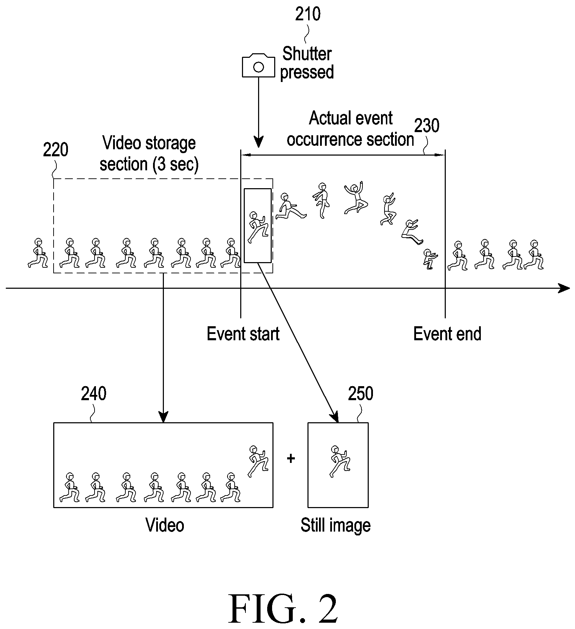

Prior to describing the disclosure, a method of capturing a photograph of a moving picture or a part of a video used in the disclosure is described with reference to FIG. 2. FIG. 2 is a view illustrating a method of obtaining a video together with a still image when capturing a photograph.

Referring to FIG. 2, the electronic device 101 may provide various capturing modes, and for example, a camera application may provide a motion photo mode in which a video is captured together with capturing of a still image as a capturing mode.

In the case of the motion photo mode, when a user presses a button (e.g., a shutter) 210 for capturing (or capturing) a still image in a state in which the motion photo function is turned on (or activated), a video 220 corresponding to a designated time before or after the still image capturing time may be stored. Accordingly, even when the user captures in the same manner as general photo capturing, the user may simultaneously obtain a video 240 having a playback section for the still image 250. As such, although the motion photo function may automatically generate and store a video together with a still image (or photograph) regarding a specific moment, a section in which the video is stored may be fixed to a predetermined time, e.g., a designated time before the capturing time (e.g., from -3 seconds to the capture time), a designated time before or after the capturing time (e.g., -1.5 seconds to 1.5 seconds), or a designated time after the capturing time (e.g., from the capture time to +3 seconds), based on the time when the button (e.g., shutter) 210 for capturing a still image is pressed. If the user presses the capturing button 210 according to the moment of jumping as illustrated in FIG. 2, the electronic device 101 may obtain (or capture) the still image 250 at the time 210 when the capturing button is pressed. The electronic device 101 may store the video 240 corresponding to the video storage section 220 of the designated time based on the capturing time together with the still image 250 in a jpeg file format. As such, when storing a video of a fixed time based on the capturing time during still image capturing, a video unrelated to the event occurrence section 230 corresponding to the actual moment of jumping may be stored. Accordingly, when a user captures a photograph, if a video of a moment that the user does not want to miss may be provided together, the user's convenience may be increased.

According to an embodiment, in order to provide a video including an event section by determining an event section regarding a specific moment in a preview image when capturing a photograph, an electronic device for capturing a photograph including an event section, an operating method thereof, and a storage medium are disclosed.

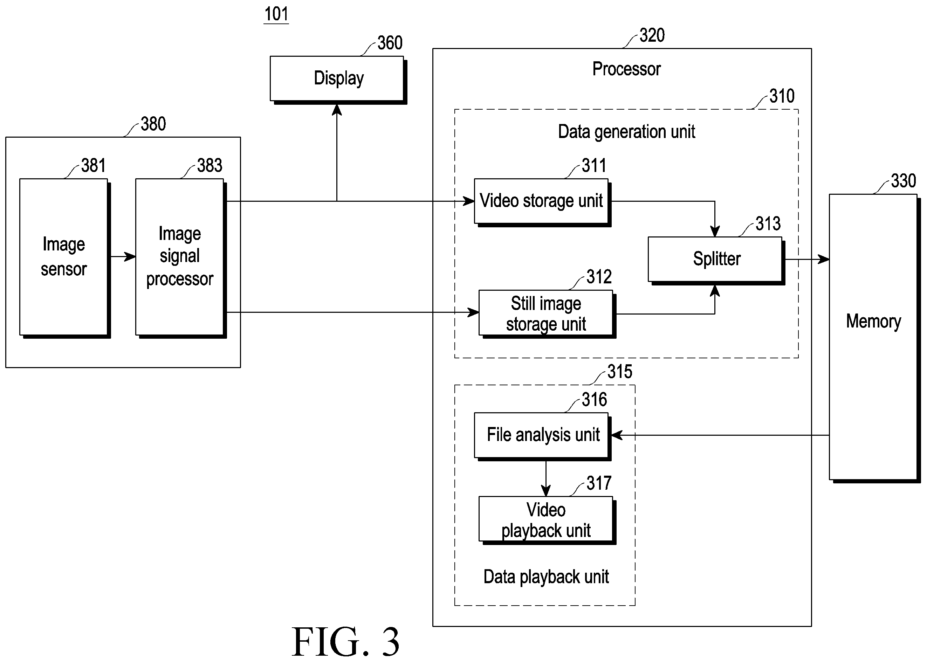

FIG. 3 is a block diagram illustrating an internal configuration of an electronic device according to an embodiment.

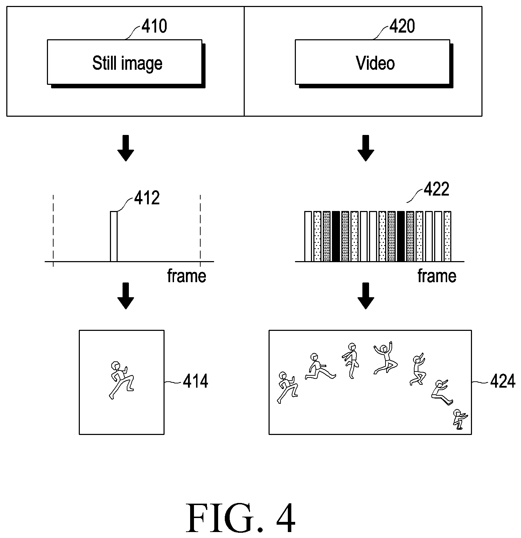

Referring to FIG. 3, the electronic device 101 may include at least one processor 320, memory 330, a display 360, and/or a camera 380. The electronic device 101 of FIG. 3 may be the electronic device 101 of FIG. 1. Here, not all components illustrated in FIG. 3 are essential components of the electronic device 101, and the electronic device 101 may be implemented by more or fewer components than the components illustrated in FIG. 3. Further, in describing FIG. 3, reference is made to FIG. 4. FIG. 4 is a file structure diagram including a video regarding an event section stored together with a still image according to an embodiment.

Referring to FIG. 3, the processor 320 may control the camera 380 to be driven when a camera application (e.g., a program or function) is executed. For example, the processor 320 may identify that there is a capturing request and execute the camera application when an input by an execution icon (e.g., an object, a graphic element, a menu, a button, or a shortcut image) (not illustrated) representing the camera application displayed on a home screen (not illustrated) of the display 360, a designated button input, or an input by a designated gesture is received.

According to an embodiment, the processor 320 may control to activate at least one camera 380 and execute content capturing according to the execution of the camera application. The processor 320 may control the display 360 to display a preview screen during content capturing. Among capturing modes provided by the camera application, a motion photo mode may be provided in a menu form on the preview screen. Further, the motion photo mode may be preset through a separate setting menu.

For example, in a case where the user turns on (or activates) the motion photo function in a state in which the preview screen is displayed, when a button (e.g., a shutter) for capturing (or capturing) a still image is pressed by the user, the processor 320 may activate at least one microphone (e.g., the microphone 150 of FIG. 1) to receive an audio signal (or acoustic signal) corresponding to a sound generated from the user, a subject, or the vicinity of the subject while generating a still image and a part of the still image as a video based on the preview screen when capturing a photograph. The content may be, e.g., video content captured by the user. In the following description, the video content may include a visual image and an audible sound, and the still image may be a photograph file in a captured format (e.g., jpeg format) at the time when the capturing button is pressed.

As such, the processor 320 may capture a still image using the camera 380, and generate a video together when capturing the still image to generate and/or store as one still image file (e.g., jpeg file). In an embodiment, the file in which the still image and the video are configured as one file may be played as the still image and the video, respectively.

Referring to FIG. 3, an image obtained (projected) through an image sensor 381 (e.g., a front sensor or a rear sensor) of the camera 380 may be signal-processed through an image signal processor (ISP) 383 into an image for preview output based on the display 360, a still image actually captured, and a video including a section in which an event occurs.

For example, the image signal processor 383 may provide an image (or a first image or a low-resolution image) having a resolution smaller than the size of an actually captured image to the display 360 as a preview image to be displayed on the display 360 of the electronic device 101. The image signal processor 383 may provide the preview image to the processor 320. According to an embodiment, the first image may be provided from the image signal processor 383 to a path for displaying the preview image by the display 360 and a path for obtaining a video by the processor 320.

The image signal processor 383 may provide an image (or a second image or a high-resolution image) having a quality and resolution higher than those of the preview image to the processor 320 as a still image captured in response to a user input (e.g., capturing button input). According to an embodiment, the second image may be captured based at least partially on a capturing option (e.g., resolution, quality, or size) set in the electronic device 101, and may be captured in various qualities and resolutions according to the capturing option.

According to an embodiment, the electronic device 101 may not include the image signal processor 383 in the camera 380. For example, the image signal processor 383 may be configured independently of the electronic device 101 or may be configured in the processor 320.

The processor 320 may include, e.g., a data generation unit 310 and a data playback unit 315. The data generation unit 310 may include a video storage unit 311, a still image storage unit 312, and a splitter 313. The video storage unit 311 and the still image storage unit 312 may be configured with at least one buffer. The data playback unit 315 may include a file analysis unit 316 and a video playback unit 317. Here, each component included in the processor 320 may be provided in the electronic device 101 in the form of one "module" or "unit" or may be provided in the memory 330 in the form of software.

According to an embodiment, the processor 320 may receive a user's setting (e.g., capturing resolution, focus, or capturing button), and control camera setting change, still image capturing, video capturing, and storage. The processor 320 may receive a first image (e.g., video, preview image) and a second image (e.g., still image) from the image signal processor 383, respectively, store (e.g., buffer) the first image through the video storage unit 311, and store (e.g., buffer) the second image through the still image storage unit 312. The processor 320 may integrate the first image (e.g., video) and the second image (e.g., still image) stored in the video storage unit 311 and the still image storage unit 312, respectively, into one file through the splitter 313.

According to an embodiment, the processor 320 may operate to obtain (or generate) a video based on an image corresponding to a section in which an event occurs at a still image capturing time when capturing a still image based on a user input. For example, the processor 320 may operate to, when detecting still image capturing, store the still image in the still image storage unit 312, and store the buffered video of the event occurrence section based on the still image capturing time in the video storage unit 311.

In an embodiment, the processor 320 may identify whether an event occurs in the preview image in response to an input for capturing a still image while displaying the preview image on the display 360.

The preview image may include an object corresponding to a subject. A subject is a term meaning an object that is a target of capturing, and may be used as a term including a person and an object, and the preview image may include an object corresponding to the subject.

For example, the processor 320 may compare a plurality of continuous image frames of a predetermined time section included in the preview image based on a still image capturing time (or a capture time). For example, in the case of an optical flow method, a movement in an image may be distinguished by calculating and extracting the motion of each pixel through a relationship between a pixel value and surrounding pixels using a difference between a previous frame and a current frame. As such, a section for comparing the image frames used to identify whether an event is included may be defined as a video analysis section.

According to an embodiment, in order to provide a video including an event section by determining an event section regarding a specific moment in a preview image when capturing a photograph, the processor 320 (or the data generation unit 310) may perform operations of detecting the video analysis section, determining the event section, and/or generating the video storage section.

According to an embodiment, the video analysis section may be a section from a designated time before the still image capturing time to the time when capturing is ended by the user (or a capturing maintenance time). For example, when a start time of the video analysis section is referred to as m1, an end time thereof is referred to as m2, and a still image capturing time is referred to as c, m1 may be a time obtained by subtracting a designated time (e.g., 3 seconds) from the still image capturing time c, and m2 may be an end time of image capturing indicated by the user. For example, m1 may be the time when an operation of the user raising the electronic device 101 to start capturing in a state in which the preview screen is displayed ends, i.e., the time when the movement of the electronic device 101 stops. Further, the end time of image capturing indicated by the user may be the time when the user puts down the electronic device 101 after holding the electronic device 101 for capturing and does not intend to capture any more. Accordingly, the processor 320 may detect a movement intended to start or end capturing using movement information of the electronic device 101 using at least one sensor (e.g., the sensor module 176 of FIG. 1). Further, since the user may capture a still image as many times as desired from the still image capturing time c to before the capturing is ended by the user, the video analysis section may be determined for each still image capturing time c.

In an embodiment, the processor 320 (or the data generation unit 310) may identify whether an event occurs by comparing a plurality of image frames corresponding to the video analysis section.

In an embodiment, the processor 320 may predefine a main object (e.g., a person, a pet, food, or an object) to be focused on in a plurality of image frames and/or an action of the object (e.g., jumping, dancing, running, eating, or exercising), and detect image frames in which the predefined main object or main action of the object is recognized. For example, the processor 320 may identify whether an event occurs by recognizing a main object and/or an action of the object in an image frame using a learning network model obtained through learning.

In an embodiment, the processor 320 may identify an amount of change of an object in a plurality of image frames. For example, the processor 320 may identify the amount of change of the object based on at least one of an occurrence location, a direction, a size, or a speed of the event in the preview image, e.g., in a plurality of image frames corresponding to the video analysis section. The processor 320 may identify that the event occurs in the preview image in response to the amount of change of the object being greater than or equal to a threshold. On the other hand, the processor 320 may identify that the event has not occurred in the preview image in response to the amount of change of the object being less than the threshold.

In an embodiment, the processor 320 may identify whether an event occurs through detection of an amount of change of motion information in a plurality of image frames. The processor 320 may calculate the amount of change of motion information between image frames using a size, a position of motion, a direction, a speed, and/or a change in color.

In an embodiment, the processor 320 may determine at least one or more frames in which an average value of a motion vector for each image frame from a plurality of image frames is continuously greater than a sequence average value of motion vectors for the plurality of image frames for a preset number of frames or more as a section in which an event is included. Further, at least one or more frames in which the average value of the motion vector for each image frame is continuously greater than a threshold for a preset number of frames or more may be determined as a section in which an event is included. Here, the threshold may be set based on various conditions such as a resolution of the preview image.

As described above, the types of events in the preview image may be various, and accordingly, a method of identifying whether an event occurs and a method of determining an event section may also be various, so the disclosure may not be limited thereto.

In an embodiment, the processor 320 (or the data generation unit 310) may determine the event section when it is identified that an event occurs in a plurality of image frames corresponding to the video analysis section. For example, the processor 320 may detect an amount of change of an object in the plurality of image frames. If the amount of change of the object is greater than or equal to a threshold, a start time of the event may be determined based on the amount of change of the object that is greater than or equal to the threshold and, when the amount of change of the object is changed to less than the threshold, the event section may be determined by determining an end time of the event based on the amount of change of the object that is less than the threshold. The processor 320 may estimate event-related information in the event section and generate meta information about the event section. Here, the meta information about the event section may include an occurrence location, a direction, a size, and/or a speed of the event.

In an embodiment, the processor 320 (or the data generation unit 310) may determine the video storage section such that the event section in which the event occurs is included in the video storage section, and store a video corresponding to the determined video storage section together with a still image in the memory 330.

In an embodiment, the processor 320 may use a start time of the event, a still image capturing time, and/or an end time of image capturing indicated by the user in determining the video storage section.

In an embodiment, the processor 320 may determine the video storage section by determining the start time of the video storage section as the start time of the event section and determining the end time of the video storage section as a time after a designated time elapses from the start time of the event section when the start time of the event section is before the still image capturing time.

In an embodiment, the processor 320 may determine the video storage section by determining the end time of the video storage section as the end time of image capturing indicated by the user and determining the start time of the video storage section as a time obtained by subtracting the designated time from the end time of image capturing when the start time of the event section is before the still image capturing time.

In an embodiment, the processor 320 may determine the video storage section by determining the end time of the video storage section as the end time of image capturing indicated by the user and determining the start time of the video storage section as a time obtained by subtracting the designated time from the end time of image capturing when the start time of the event section is after the still image capturing time.

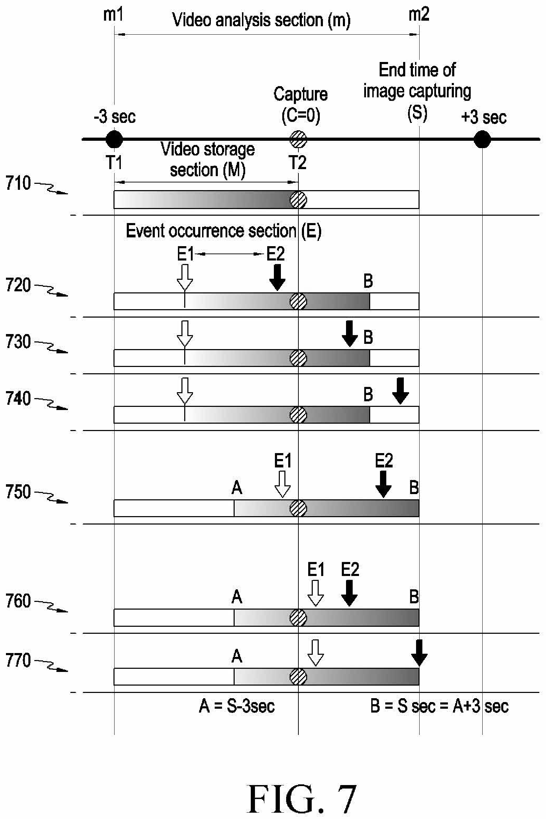

As described above, by adaptively adjusting the video storage section based on the start time of the event, the still image capturing time, and/or the end time of image capturing indicated by the user, the processor 320 may obtain the video storage section including the event section. Accordingly, the processor 320 may obtain a video corresponding to the video storage section and store the video in the video storage unit 311, and the video may include images of the event section. A method of determining such a video storage section is described below with reference to FIG. 7.

The processor 320 may operate to integrate (add) the video stored in the video storage unit 311 to the still image (e.g., a front portion or a rear portion of the still image) stored in the still image storage unit 312 through the splitter 313 to configure as one file. The processor 320 may configure the still image and the video as one file and store the configured file in the memory 330.

FIG. 4 may be referred to for examining a configuration example of a file stored in the memory 330.

FIG. 4 illustrates an example of one file structure in which a still image and a video are integrated, and a still image 410 and a video 420 may be distinguished and configured as one file. As illustrated in FIG. 4, the still image 410 may be an image 414 in a designated format (e.g., jpeg file format) regarding a specific moment with one image frame 412. On the other hand, the video 420 may be a video 420 regarding an event section 424 with a plurality of image frames 422. For example, in order to output (or play, display) the video in slow motion, the processor 320 may obtain an image at high speed (or at a designated frame rate) when recording the video 420, and store the high-speed obtained images based on a normal speed. To this end, the processor 320 may store meta information about the event section together with the video 420. Accordingly, the processor 320 may play as a video having a slow motion effect based on the meta information about the event section.

In FIG. 4, a case where the still image 410 and the video 420 are stored and managed as one file rather than being stored and managed in different memory areas is illustrated, but video connection information rather than the video 420 itself may be stored and managed together with the still image 410 in the form of one file. In other words, the video 420 may be stored at another location of the memory 330 separately from the still image 410, and connection information (e.g., link information) of the video stored at another location of the memory 330 may be added to the still image (e.g., a front portion or a rear portion of the still image) to generate as a still image file, and for example, the still image and the video may be stored and managed in different memory areas. The connection information may include, e.g., a location of the memory 330 in which the video is stored and/or a file name of the video. According to an embodiment, the connection information may include meta information about the event section.

According to an embodiment, the processor 320 may play the file in which the still image and the video are configured as one in response to a user input (e.g., image playback input) and display through the display 360. The processor 320 may analyze and distinguish (or separate) a still image portion (e.g., the still image 410 of FIG. 4) and a video portion (e.g., the video 420 of FIG. 4) from the file through the file analysis unit 316 in response to detecting a user input for playing the file stored in the memory 330.

According to an embodiment, the processor 320 may display a guide for playing the video in a state in which the still image is displayed on the display 360. The processor 320 may identify the meta information in response to receiving a user input for playing the video to play the video portion including the event section.

The processor 320 may control the video playback unit 317 to play the video portion from the file and display through the display 360. According to an embodiment, the processor 320 may display the still image portion from the file through a still image application (e.g., a gallery application) (not illustrated) and play the video portion from the file through the video playback unit 317 based on the meta information. Accordingly, a part of the video corresponding to the event section may be played at a playback speed corresponding to the meta information. According to an embodiment, the processor 320 may perform video playback based on the meta information from a start position of the video after the still image from the file. The processor 320 may end the video playback at an end position of the video and operate to display the still image again.

According to an embodiment, an electronic device 101 may include a camera 180, 380, a display 160, 360, at least one processor 120, 320, and memory 130, 330. According to an embodiment, the memory may store instructions configured to, when executed by the at least one processor, cause the electronic device to display a preview image obtained through the camera on the display.

According to an embodiment, the instructions may be configured to cause the electronic device to receive a first input for capturing a still image while displaying the preview image on the display.

According to an embodiment, the instructions may be configured to cause the electronic device to, in response to receiving the first input, detect an amount of change of an object included in the preview image.

According to an embodiment, the instructions may be configured to cause the electronic device to, based on the amount of change of the object, identify whether an event occurs in the preview image.

According to an embodiment, the instructions may be configured to cause the electronic device to, in response to identifying that the event occurs in the preview image, determine an event section including a start time and an end time of the event.

According to an embodiment, the instructions may be configured to cause the electronic device to store a video corresponding to the event section together with the still image.

According to an embodiment, the instructions may be configured to cause the electronic device to, in response to receiving a second input for playing the video, play the video based on meta information about the event section.

According to an embodiment, the instructions may be configured to cause the electronic device to identify the amount of change of the object based on at least one of an occurrence location, a direction, a size, or a speed of the event in the preview image, identify that the event occurs in the preview image in response to the amount of change of the object being greater than or equal to a threshold, and identify that the event has not occurred in the preview image in response to the amount of change of the object being less than the threshold.

According to an embodiment, the instructions may be configured to generate meta information about the event section indicating the amount of change of the object, and store the meta information about the event section to be associated with the video.

According to an embodiment, the instructions may be configured to determine a video storage section to include the determined event section, and store the video corresponding to the determined video storage section.

According to an embodiment, the instructions may be configured to, when the start time of the event section is before the time of receiving the first input, determine the start time of the video storage section as the start time of the event section, and determine the end time of the video storage section as a time after a designated time elapses from the start time of the event section.

According to an embodiment, the instructions may be configured to, when the start time of the event section is before the time of receiving the first input, determine the end time of the video storage section as the end time of image capturing indicated by the user, and determine the start time of the video storage section as a time obtained by subtracting the designated time from the end time of image capturing.

According to an embodiment, the instructions may be configured to, when the start time of the event section is after the time of receiving the first input, determine the end time of the video storage section as the end time of image capturing indicated by the user, and determine the start time of the video storage section as a time obtained by subtracting the designated time from the end time of image capturing.

According to an embodiment, the instructions may be configured to identify an amount of movement of the electronic device using at least one sensor of the electronic device, and determine the end time of image capturing indicated by the user based on the amount of movement.

According to an embodiment, the instructions may be configured to display a guide for playing the video in a state in which the still image is displayed on the display, identify meta information about the event section in response to receiving a second input for playing the video, and play a part of the video corresponding to the event section at a playback speed corresponding to the meta information.

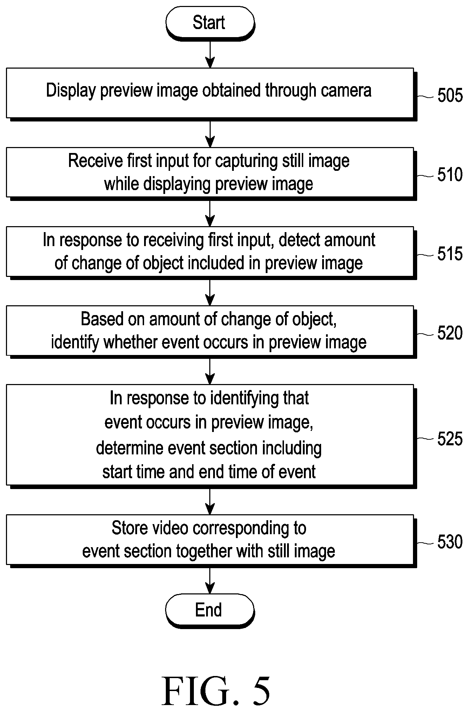

FIG. 5 is an operation flowchart of an electronic device for capturing a photograph including an event section according to an embodiment. Referring to FIG. 5, the operation method may include operations 505 to 525. Each operation of the operation method of FIG. 5 may be performed by at least one processor (e.g., the processor 120 of FIG. 1 and the processor 320 of FIG. 3) of an electronic device (e.g., the electronic device 101 of FIGS. 1 and 3). In an embodiment, at least one of operations 505 to 525 may be omitted, an order of some operations may be changed, or another operation may be added.

Referring to FIG. 5, when a camera application is selected by the user, the electronic device 101 may display a preview image obtained through the camera 380 on the display 360 in operation 505.

In operation 510, the electronic device 101 may receive a first input for capturing a still image while displaying the preview image.

In operation 515, the electronic device 101 may detect an amount of change of an object included in the preview image in response to receiving the first input.

In operation 520, the electronic device 101 may identify whether an event occurs in the preview image based on the amount of change of the object.

According to an embodiment, the electronic device 101 may identify the amount of change of the object based on at least one of an occurrence location, a direction, a size, or a speed of the event in the preview image. The electronic device 101 may identify that the event occurs in the preview image in response to the amount of change of the object being greater than or equal to a threshold. On the other hand, the electronic device 101 may identify that the event has not occurred in the preview image in response to the amount of change of the object being less than the threshold.

In operation 525, the electronic device 101 may determine an event section including a start time and an end time of the event in response to identifying that the event occurs in the preview image.

In operation 530, the electronic device 101 may store a video corresponding to the event section together with the still image.

According to an embodiment, the electronic device 101 may generate meta information about the event section indicating the amount of change of the object, and store the meta information about the event section to be associated with the video.

According to an embodiment, the electronic device 101 may determine a video storage section to include the determined event section, and store the video corresponding to the determined video storage section.

According to an embodiment, the electronic device 101 may, when the start time of the event section is before the time of receiving the first input, determine the start time of the video storage section as the start time of the event section, and determine the end time of the video storage section as a time after a designated time elapses from the start time of the event section.

According to an embodiment, the electronic device 101 may, when the start time of the event section is after the time of receiving the first input, determine the end time of the video storage section as the end time of image capturing indicated by the user, and determine the start time of the video storage section as a time obtained by subtracting the designated time from the end time of image capturing.

According to an embodiment, the electronic device 101 may identify an amount of movement of the electronic device 101 using at least one sensor of the electronic device 101, and determine the end time of image capturing indicated by the user based on the amount of movement.

According to an embodiment, the electronic device 101 may play the video based on meta information about the event section in response to receiving a second input for playing the video.

According to an embodiment, the electronic device 101 may display a guide for playing the video in a state in which the still image is displayed, identify meta information about the event section in response to receiving a second input for playing the video, and play a part of the video corresponding to the event section at a playback speed corresponding to the meta information.

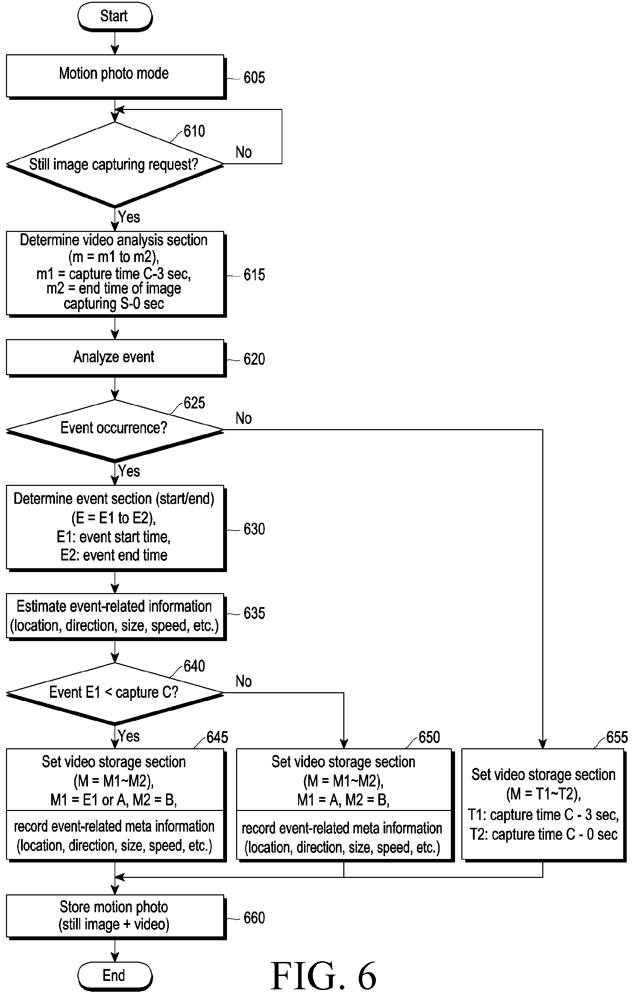

FIG. 6 is an operation flowchart of an electronic device for identifying an event section when capturing a photograph according to an embodiment. Referring to FIG. 6, an operation method may include operations 605 to 660. Each operation of the operation method of FIG. 6 may be performed by at least one processor (e.g., the processor 120 of FIG. 1 and the processor 320 of FIG. 3) of an electronic device (e.g., the electronic device 101 of FIGS. 1 and 3). In an embodiment, at least one of operations 605 to 660 may be omitted, an order of some operations may be changed, or another operation may be added. Further, in describing FIG. 6, reference is made to FIG. 7. FIG. 7 is a view illustrating a method for determining an event section according to an embodiment.

Referring to FIG. 6, the electronic device 101 may execute a camera application and activate the camera 380. The electronic device 101 may display a preview image corresponding to signals input from the camera 380. The preview image may be a preview image illustrating an image to be captured in advance through the display 360 before capturing.

In operation 605, the electronic device 101 may identify whether there is a still image capturing request in operation 610 while operating in the motion photo mode. In response to receiving the still image capturing request, the electronic device 101 may determine a video analysis section in operation 615. In operation 610, when the still image capturing request is not received, the electronic device 101 may maintain the operation of displaying the preview image.

For example, referring to FIG. 7, when a start time of the video analysis section m is referred to as m1, an end time thereof is referred to as m2, and a capture time (or a still image capturing time) is referred to as C, m1 may be a time obtained by subtracting a designated time (e.g., 3 seconds) from the capture time C, and m2 may be an end time S of image capturing indicated by the user. The end time S of image capturing indicated by the user may be the time when the user puts down the electronic device 101 after holding the electronic device 101 for capturing and does not intend to capture any more.

In operation 620, the electronic device 101 may analyze an event. For example, the electronic device 101 may analyze an event in the video analysis section (m = m1 to m2). The electronic device 101 may analyze a plurality of image frames of the video analysis section and detect an amount of change of motion between image frames or an amount of change of an object included in the image frame. The electronic device 101 may compare the amount of change of motion or the amount of change of the object with a threshold.

In operation 625, the electronic device 101 may identify whether an event occurs. For example, the electronic device 101 may identify the amount of change of the object based on at least one of an occurrence location, a direction, a size, or a speed of the event in the preview image, and identify that the event occurs in the preview image in response to the amount of change of the object being greater than or equal to a threshold.

On the other hand, in response to the amount of change of the object being less than the threshold, it may be identified that the event has not occurred in the preview image. For example, when movement of a person or an object occurs at a location far from the camera 380 in the preview image, but the movement of the object, e.g., the amount of change of the object is not greater than or equal to the threshold, it may be determined that the event has not occurred in a plurality of image frames.

When it is identified that the event has not occurred, the electronic device 101 may perform operation 655. In operation 655, the electronic device 101 may set the video storage section M to a designated time before or after the capture time C. For example, as illustrated in 710 of FIG. 7, when a start time of the video storage section M is referred to as M1 and an end time is referred to as M2, in the event non-occurrence state, the video storage section (M = T1 to T2) may be determined as a section of a designated time (e.g., 3 seconds). For example, a section of a designated time (e.g., 3 seconds) before the capture time C (e.g., C - 3 seconds) may be determined as the video storage section M. Further, a section of a designated time (e.g., 3 seconds) after the capture time C (e.g., C + 3 seconds) may be determined as the video storage section M.

On the other hand, in operation 630, when it is identified that the event occurs, the electronic device 101 may determine the event section (e.g., start/end). Here, E1 may represent the start time of the event, and E2 may represent the end time of the event.

In operation 635, the electronic device 101 may estimate event-related information. For example, the event-related information may include an occurrence location, a direction, a size, or a speed of the event, and may be meta information about the event section.

In operation 640, the electronic device 101 may identify whether the event start time E1 is before the capture time C. If the event start time E1 is before the capture time C, the electronic device 101 may set the video storage section and record meta information about the event section together in operation 645. For example, meta information in which information such as a location, a direction, a size, or a speed is synchronized to correspond to the start time and the end time of the event section may be generated and recorded. For example, referring to FIG. 7, when the start time of the video storage section M is referred to as M1, the end time is referred to as M2, and the capture time is referred to as C, the start time M1 of the video storage section M may be determined by dividing into a case where the event start time E1 is before or after the capture time C.

As illustrated in 720 to 740 of FIG. 7, when the event start time E1 is before the capture time C, the start time M1 of the video storage section may be determined as the event start time E1, and the end time M2 may be determined as a time (e.g., E1 + 3 seconds) after a designated time (e.g., 3 seconds) elapses from the event start time E1. Here, when the start time M1 of the video storage section is referred to as the event start time E1 or A, and the end time M2 is referred to as B, a section between A and B may correspond to the designated time (e.g., 3 seconds).

Further, as illustrated in 750 of FIG. 7, the event start time E1 may be before the capture time C, but a time from the event start time E1 to the end time S of image capturing may be less than the designated time (e.g., 3 seconds). For example, when a time from the event start time E1 to the end time S of image capturing by the user is less than the designated time (e.g., 3 seconds), the video storage start time (M1 = A) may be determined as the time A (S - 3 seconds) such that the designated time (e.g., 3 seconds) is secured up to the end time S of image capturing by the user.

Accordingly, the electronic device 101 may, when the event start time E1 is before the capture time C, determine the end time M2 of the video storage section as the end time S of image capturing indicated by the user, and determine the start time M1 of the video storage section as a time obtained by subtracting the designated time (e.g., 3 seconds) from the end time S of image capturing. Further, the electronic device 101 may determine the end time M2 of the video storage section (M2 = B = S) as the end time S of image capturing.

On the other hand, when the event start time E1 is after the capture time C, the electronic device 101 may set the video storage section and record meta information about the event section together in operation 650. Here, the video storage section may be determined using the end time S of image capturing indicated by the user. When the event start time E1 is after the capture time C, the electronic device 101 may determine the start time M1 of the video storage section based on the end time S of image capturing regardless of the event start time E1.

As illustrated in 760 and 770 of FIG. 7, the end time M2 of the video storage section may be determined as the end time S of image capturing indicated by the user, and the start time M1 of the video storage section may be determined as a time obtained by subtracting the designated time (e.g., 3 seconds) from the end time S of image capturing. Further, the electronic device 101 may determine the end time M2 of the video storage section (M2 = B = S) as the end time S of image capturing.

In an embodiment, when the video storage section M including the event section E is determined as in 710 to 770 of FIG. 7, the electronic device 101 may store the still image together with a video including the event section as a motion photo in operation 660. Further, in order to output (or play, display) the video in slow motion, the electronic device 101 may obtain an image at high speed (or at a designated frame rate) when storing a video corresponding to the determined video storage section M, and record meta information about the video together.

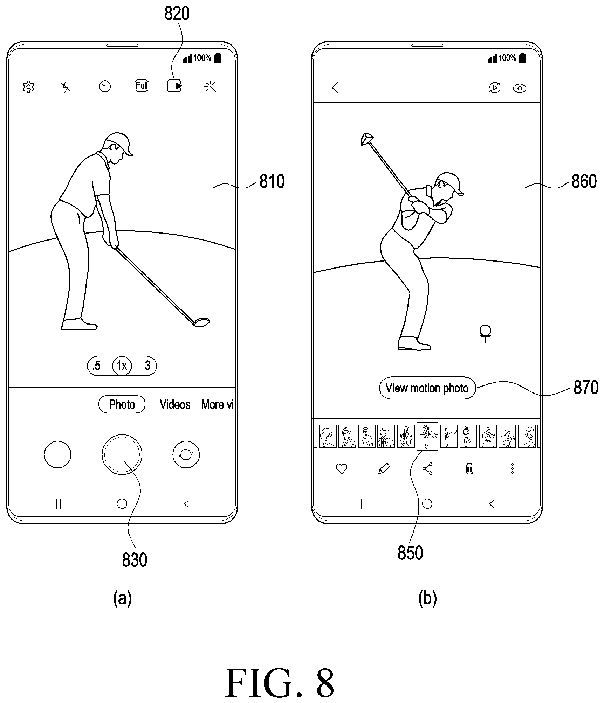

FIG. 8 is a view illustrating an example of a screen before and after capturing a photograph according to an embodiment.

FIG. 8(a) illustrates a screen 810 on which a preview image is displayed when a camera application is executed. Referring to FIG. 8(a), in response to a selection of an object 820 indicating the motion photo function by the user, the electronic device 101 may operate in the motion photo mode. Accordingly, while operating in the motion photo mode, the electronic device 101 may store a video including an event section together with a still image in response to an input to a button 830 for capturing a still image.

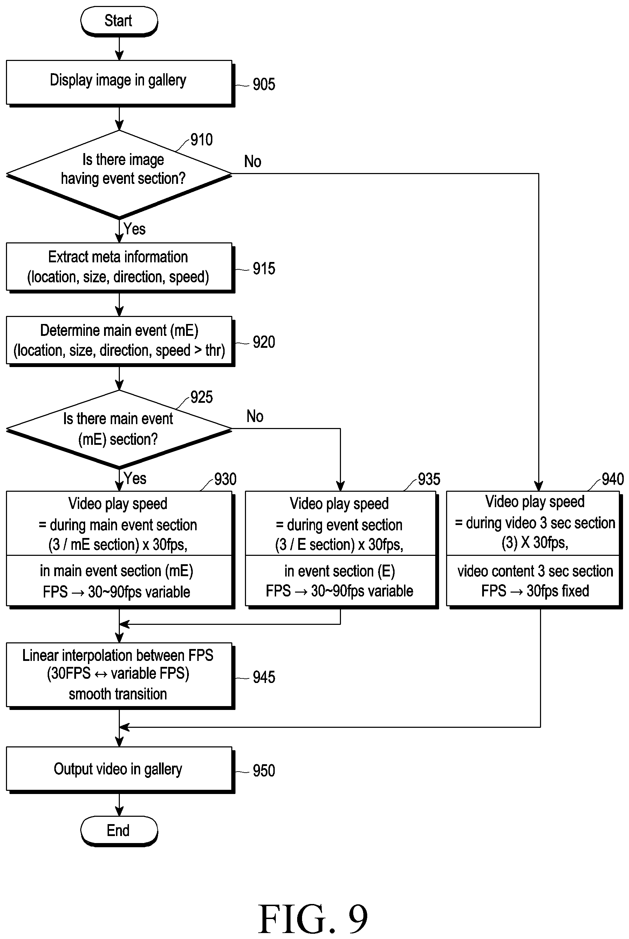

The user may check the stored image through an application related to the image (e.g., a gallery application). FIG. 8(b) illustrates a screen 860 on which thumbnail images 850 of a plurality of images stored in the memory 330 are displayed as the application related to the image (e.g., the gallery application) is executed. As in FIG. 8(b), the electronic device 101 may intuitively recognize an image captured in the general mode and an image captured in the motion photo mode by displaying an object (or indicator) 870 of "view motion photo." Accordingly, in response to the user selection of the object 870, the electronic device 101 may automatically output (or play) the video stored in association with the still image. In an embodiment, since the meta information about the event section is stored in association with the video, the video playback may be controlled based on the meta information. To describe this, reference is made to FIG. 9 to FIG. 11.

FIG. 9 is an operation flowchart of an electronic device for playing an image according to an embodiment. Referring to FIG. 9, an operation method may include operations 905 to 950. Each operation of the operation method of FIG. 9 may be performed by at least one processor (e.g., the processor 120 of FIG. 1 and the processor 320 of FIG. 3) of an electronic device (e.g., the electronic device 101 of FIGS. 1 and 3). In an embodiment, at least one of operations 905 to 950 may be omitted, an order of some operations may be changed, or another operation may be added.

Referring to FIG. 9, in operation 905, the electronic device 101 may display an image in the gallery. In operation 910, the electronic device 101 may identify whether the image is an image having an event section. In an embodiment, the electronic device 101 may display a plurality of thumbnail images as the application related to the image (e.g., the gallery application) is executed. For example, as in FIG. 8(b), when any one thumbnail image among the thumbnail images of a plurality of images is selected, it may be identified whether the selected image is an image having an event section.

When the image is not an image having an event section, the electronic device 101 may play the video at a normal speed during a designated time (e.g., 3 seconds) section in operation 940. For example, the video may be played at a designated speed (e.g., a speed fixed at 30 fps). For example, a correction technique for designated speed playback is referred to as frame interpolation or framerate up conversion (FRC), and the electronic device 101 may generate and play a video at a selected frames per second (FPS) through the technique.

On the other hand, in operation 915, the electronic device 101 may extract meta information associated with the event section in response to identifying that the image is an image having an event section. The meta information may include at least one of a location, a size, a direction, or a speed of the event.

In operation 920, the electronic device 101 may determine a specific event within the event section as a main event. For example, the main event may be determined through comparison with a threshold using at least one of the location, the size, the direction, or the speed of the event. Here, the location, the size, the direction, or the speed of the event, which is a component of the meta information, may be compared with the threshold through quantification. Alternatively, components corresponding to each of the location, the size, the direction, or the speed of the event may be made in a table form and used to determine the main event.

When it is identified that there is a main event section in operation 925, in response to identifying that there is a main event section, the electronic device 101 may determine a playback speed corresponding to the meta information during the main event section in operation 930.

In operation 935, in response to identifying that there is no main event section, the electronic device 101 may determine a playback speed corresponding to the meta information during the event section in operation 935.

In operation 945, the electronic device 101 may vary the playback speed based on the playback speed determined in operations 930 to 940, and accordingly, in operation 950, the electronic device 101 may output (or play) the video in the gallery. For example, the playback speed may be switched between a normal playback speed and a variable playback speed (e.g., 30 fps to variable fps).

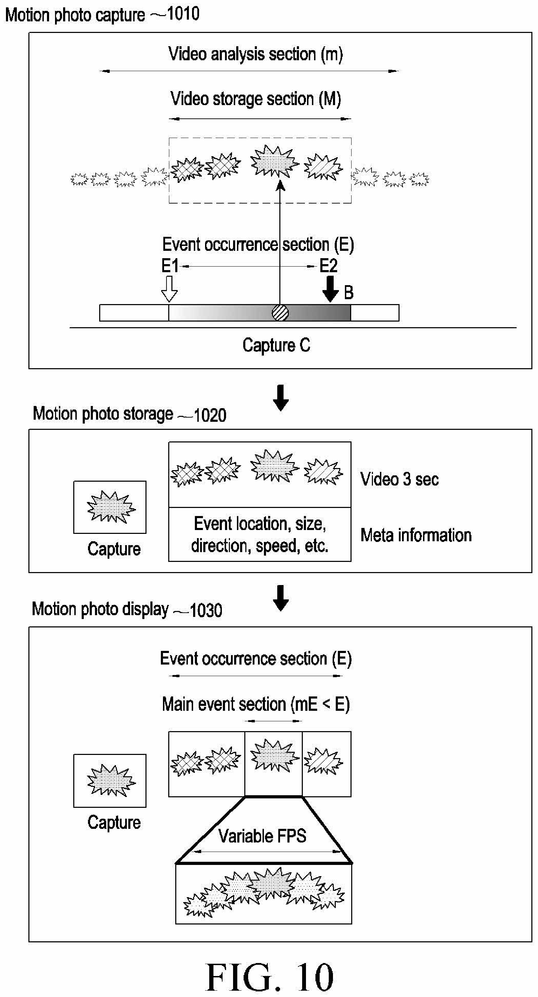

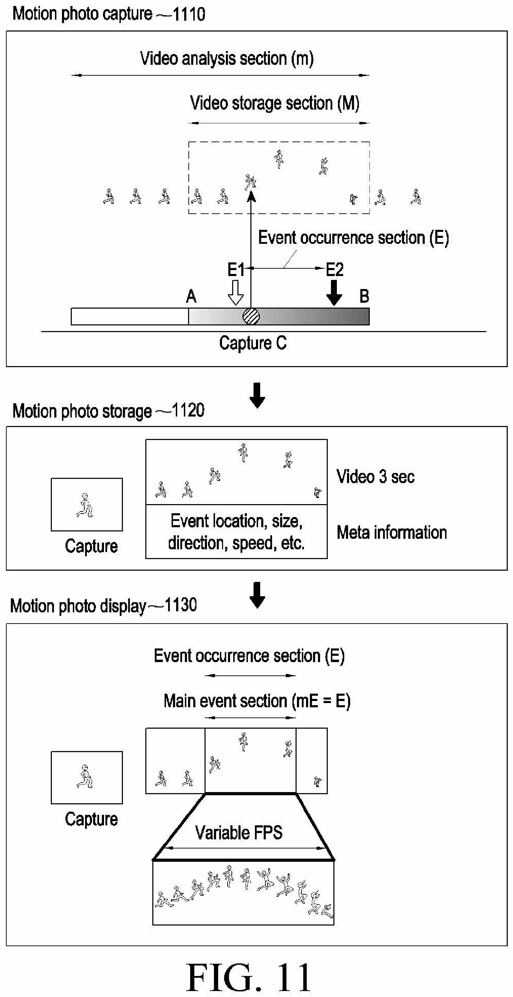

For example, referring to FIG. 10 and FIG. 11, which are views illustrating a playback method that varies according to an event attribute according to an embodiment, in the motion photo capture operation 1010, 1110, in order to output (or play, display) the video in slow motion, an image may be obtained at high speed (or at a designated frame rate) when storing the video. For example, the electronic device 101 may obtain an image at high speed (or at a designated frame rate) when recording a video, store the high-speed obtained images based on a normal speed, and play the video at different playback speeds with reference to meta information about the event section during playback.

In the motion photo storage operation 1020, 1120, the electronic device 101 may store the high-speed obtained images based on a normal speed, and store event-related information such as an event location, a size, a direction, or a speed as meta information in synchronization with the video. Accordingly, in the motion photo display operation 1030, 1130, when a main event section is present in the event section, the electronic device 101 may play the video at a variable playback speed for the main event section. For example, when the event section (or event occurrence section) E and the main event section mE are present (see operation 930), when the main event section mE within the event section E is 3 seconds, the playback speed may be varied at 30 fps and, when 1 second, at 3*30 fps. (e.g., the motion photo display operation 1030 of FIG. 10) For example, referring to the motion photo display operation 1030 of FIG. 10, when the main event section mE is present within the event section E, the image may be played at a first playback speed in the event section E, and the image may be played at a second playback speed that is faster than the first playback speed for the main event section mE included in the event section E.

For example, when the entire event section E is 3 seconds and the main event section mE included in the event section E is 3 seconds, the second playback speed for the main event section mE may be (3/mE (e.g., 3 seconds)) * 30 fps. Further, assuming that the entire event section E is 3 seconds and the main event section mE included in the event section E is 1 second, the image may be played at a first playback speed of (3/E (e.g., 2 seconds)) * 30 fps in the remaining event section (e.g., 2 seconds) except for the main event section mE, and the image may be played at a second playback speed of (3/mE (e.g., 1 second)) * 30 fps in the main event section mE. Further, the operation of varying the playback speed to the first playback speed (e.g., 45 fps) may not be performed for the remaining event section (E - mE) (e.g., 2 seconds) except for the main event section mE, and the image may be played at a speed varied only to the second playback speed (e.g., 90 fps) for the main event section mE (e.g., 1 second).

For example, in order to output (or play, display) the video in slow motion, an image is obtained at high speed (or at a designated frame rate) when recording a video and the high-speed obtained images are stored based on a normal speed, and more frames are stored for the main event section mE compared to the event section E, but the images may be output at different playback speeds, so the user may visually identify the event section E and the main event section mE while watching the image played at different playback speeds.

On the other hand, even when the main event section mE is not present (see operation 935), the electronic device 101 may vary the playback speed according to the length of the event section E. Accordingly, the playback speed (or speed) of the event section E may be (3 seconds/E seconds) * 30 fps. (e.g., the motion photo display operation 1130 of FIG. 11)

According to an embodiment, the electronic device 101 may play as a video having a slow motion effect based on the meta information for the main event section as well as the event section.

According to an embodiment, in FIG. 9, slow motion that varies the playback speed is described as an example, but for example, a zooming effect may be applied according to the size or direction of the event for the event section, and the visual effect applicable to the event section may not be limited thereto.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-transitory storage medium storing instructions, the instructions are configured to, when executed by at least one processor 120, 320 of an electronic device 101, cause the electronic device to perform at least one operation, and the at least one operation may include an operation of displaying a preview image obtained through a camera.

According to an embodiment, the at least one operation may include an operation of receiving a first input for capturing a still image while displaying the preview image.

According to an embodiment, the at least one operation may include an operation of, in response to receiving the first input, detecting an amount of change of an object included in the preview image.

According to an embodiment, the at least one operation may include an operation of, based on the amount of change of the object, identifying whether an event occurs in the preview image.

According to an embodiment, the at least one operation may include an operation of, in response to identifying that the event occurs in the preview image, determining an event section including a start time and an end time of the event.

According to an embodiment, the at least one operation may include an operation of storing a video corresponding to the event section together with the still image.

Technical aspects to be achieved by the disclosure are not limited to the above-mentioned technical aspects, and other technical aspects not mentioned are clearly understood by those skilled in the art of the disclosure.

Effects that may be obtained by the disclosure are not limited to the above-mentioned effects, and other effects not mentioned are clearly understood by those skilled in the art of the disclosure.

## Claims

1. An electronic device (101) comprising,
a camera (180, 380);
a display (160, 360);
at least one processor (120, 320); and
memory (130, 330) storing instructions configured to, when executed individually or collectively by the at least one processor, cause the electronic device to:
display a preview image obtained through the camera on the display,
receive a first input for capturing a still image while displaying the preview image on the display,
in response to receiving the first input, detect an amount of change of an object included in the preview image,
based on the amount of change of the object, identify whether an event occurs in the preview image,
in response to identifying that the event occurs in the preview image, determine an event section including a start time and an end time of the event, and
store a video corresponding to the event section together with the still image.

2. The electronic device of claim 1, wherein the instructions are configured to cause the electronic device to:
in response to receiving a second input for playing the video, play the video based on meta information about the event section.

3. The electronic device of claim 1 or 2, wherein the instructions are configured to cause the electronic device to:
identify the amount of change of the object based on at least one of an occurrence location, a direction, a size, or a speed of the event in the preview image,
in response to the amount of change of the object being greater than or equal to a threshold, identify that the event occurs in the preview image, and
in response to the amount of change of the object being less than the threshold, identify that the event has not occurred in the preview image.

4. The electronic device of any one of claims 1 to 3, wherein the instructions are configured to cause the electronic device to:
generate meta information about the event section indicating the amount of change of the object, and
store the meta information about the event section to be associated with the video.

5. The electronic device of any one of claims 1 to 4, wherein the instructions are configured to cause the electronic device to:
determine a video storage section to include the determined event section, and
store the video corresponding to the determined video storage section.

6. The electronic device of any one of claims 1 to 5, wherein the instructions are configured to cause the electronic device to:
in the case where the start time of the event section is before the time of receiving the first input, determine the start time of the video storage section as the start time of the event section, and
determine an end time of the video storage section as a time after a specified time has elapsed from the start time of the event section.

7. The electronic device of any one of claims 1 to 6, wherein the instructions are configured to cause the electronic device to:
in the case where the start time of the event section is before the time of receiving the first input, determine the end time of the video storage section as an end time of image capturing indicated by the user, and
determine the start time of the video storage section as a time obtained by subtracting the specified time from the end time of image capturing.

8. The electronic device of any one of claims 1 to 7, wherein the instructions are configured to cause the electronic device to:
in the case where the start time of the event section is after the time of receiving the first input, determine the end time of the video storage section as the end time of image capturing indicated by the user, and
determine the start time of the video storage section as a time obtained by subtracting the specified time from the end time of image capturing.

9. The electronic device of any one of claims 1 to 8, wherein the instructions are configured to cause the electronic device to:
identify an amount of movement of the electronic device using at least one sensor of the electronic device, and
determine the end time of image capturing indicated by the user based on the amount of movement.

10. The electronic device of any one of claims 1 to 9, wherein the instructions are configured to cause the electronic device to:
display a guide for playing the video while the still image is displayed on the display,
in response to receiving a second input for playing the video, identify meta information about the event section, and
play a part of the video corresponding to the event section at a playback speed corresponding to the meta information.

11. A method for capturing a photograph including an event section in an electronic device, the method comprising:
displaying a preview image obtained through a camera;
receiving a first input for capturing a still image while displaying the preview image;
in response to receiving the first input, detecting an amount of change of an object included in the preview image;
based on the amount of change of the object, identifying whether an event occurs in the preview image;
in response to identifying that the event occurs in the preview image, determining an event section including a start time and an end time of the event; and
storing a video corresponding to the event section together with the still image.

12. The method of claim 11, further comprising:
in response to receiving a second input for playing the video, playing the video based on meta information about the event section.

13. The method of claim 11 or 12, wherein the determining the event section includes:
identifying the amount of change of the object based on at least one of an occurrence location, a direction, a size, or a speed of the event in the preview image;
in response to the amount of change of the object being greater than or equal to a threshold, identifying that the event occurs in the preview image; and
in response to the amount of change of the object being less than the threshold, identifying that the event has not occurred in the preview image.

14. The method of any one of claims 11 to 13, wherein storing the video corresponding to the event section together with the still image includes:
generating meta information about the event section indicating the amount of change of the object; and
storing the meta information about the event section to be associated with the video.

15. A non-transitory storage medium storing instructions configured to, when executed by at least one processor (120, 320) of an electronic device (101), cause the electronic device to perform at least one operation, the at least one operation comprising:
displaying a preview image obtained through a camera;
receiving a first input for capturing a still image while displaying the preview image;
in response to receiving the first input, detecting an amount of change of an object included in the preview image;
based on the amount of change of the object, identifying whether an event occurs in the preview image;
in response to identifying that the event occurs in the preview image, determining an event section including a start time and an end time of the event; and
storing a video corresponding to the event section together with the still image.
